# EUROPEAN PATENT SPECIFICATION

(11) **EP 3 627 336 B1**
(45) Date of publication and mention of the grant of the patent: **01.12.2021**
(21) Application number: 19188994.8
(22) Date of filing: 18.10.2012
(51) Int. Cl.: G06F 15/16

(54) **METHOD AND APPARATUS FOR SHARING CONTENTS BETWEEN DEVICES**
VERFAHREN UND VORRICHTUNG ZUR GEMEINSAMEN NUTZUNG VON INHALTEN ZWISCHEN VORRICHTUNGEN
PROCÉDÉ ET APPAREIL DE PARTAGE DE CONTENUS ENTRE DES DISPOSITIFS

(30) Priority: 21.10.2011 KR 20110108135
(43) Date of publication of application: 25.03.2020
(62) Divisional of application: 12842516.2
(73) Proprietor: Samsung Electronics Co., Ltd., Gyeonggi-do 16677 (KR)
(72) Inventor: PARK, Hyun-Cheol, 16677 Suwon-si, (KR); KIM, Jin-Hyoung, 16677 Suwon-si, (KR); KWON, Joon-Hwan, 16677 Suwon-si, (KR); YOON, Won-Shik, 16677 Suwon-si, (KR); LEE, Jin-Wook, 16677 Suwon-si, (KR)
(74) Representative: HGF

(56) References cited:
- US-A1- 2009 081 950
- google code: "Google Tv Remote", Google code archive , 22 March 2011 (2011-03-22), XP002797286, Retrieved from the Internet: URL:https://code.google.com/archive/p/goog le-tv-remote/ [retrieved on 2020-01-30] & Google code: "google-tv-pairing-protocol", Google code Archive , 22 March 2011 (2011-03-22), Retrieved from the Internet: URL:https://code.google.com/archive/p/goog le-tv-pairing-protocol/ [retrieved on 2020-01-30]
- Antonio Wells: "Google TV Remote Android App Review", , 20 December 2010 (2010-12-20), XP055009834, Retrieved from the Internet: URL:http://www.androidtapp.com/google-tv-r emote/ [retrieved on 2011-10-18]

## Description

### Technical Field

The present disclosure relates to a method and apparatus for sharing contents between devices.

### Background Art

The development of information communication technologies results in the spread of a home network system for implementing in-door information devices such as a Television (TV), a Personal Computer (PC), and a mobile terminal by using a network and for integrally managing the devices. Document D1: Antonio Wells: "Google TV Remote Android App Review", 20 December 2010 (2010-12-20), XP055009834 teaches that an android device can be used as a TV remote control.

Accordingly, there is a need to propose a technique capable of more effectively sharing contents between devices in a home network and capable of providing real-time control between the sharing devices.

### Disclosure of Invention

### Solution to Problem

To address the above-discussed deficiencies of the prior art, it is a primary object to provide at least the advantages described below. Accordingly, an aspect of the present disclosure is to provide a method and apparatus for sharing web contents between devices.

Another aspect of the present disclosure is to provide a method and apparatus for sharing web contents between devices by using Uniform Resource Locator (URL) information of the web contents.

Another aspect of the present disclosure is to provide a method and apparatus for controlling a user interface of a peer device on a real-time basis in such a manner that a device which requests to share web contents transitions to a control mode for operating as an input element of the peer device when web contents are shared between the devices.

Another aspect of the present disclosure is to provide a method and apparatus for controlling a peer device in such a manner that at least one of a voice, touch, and motion of a user is recognized by a device which requests to share web contents, when web contents are shared between the devices

In accordance with an aspect of the present disclosure, a method for sharing a web page between a device and peer devices is provided. The method comprises, in the device: searching for a peer device; transmitting, to the peer device, a sharing request signal requesting the peer device to display the web page, wherein the sharing request signal includes location information of the web page; operating in a first control mode operating as a touch mouse for controlling the peer device, in response to transmitting the sharing request signal; detecting a touch coordinate corresponding to a screen touch operation of a user; transmitting, to the peer device, a control signal corresponding to the detected touch coordinate to move a mouse cursor on the web page displayed on the peer device; receiving, from the peer device, a request to change input means for controlling the peer device; and in response to receiving the request, transition from the first control mode to a second control mode for inputting characters into a character input window of the web page displayed on the peer device.

In accordance with another aspect of the present disclosure, a method for sharing a web page is provided. The method comprises, at a peer device: transmitting, to a device, a signal for indicating that the web page can be displayed by the peer device; receiving, from the device, a sharing request signal including location information of the web page; displaying the web page after receiving the sharing request signal using the location information; transmitting, to the device, information including that the peer device supports inputs based on a touch mouse, a keyboard, and a microphone; receiving, from the device, a control signal associated with the touch mouse; controlling the displayed web page in accordance with the control signal; and transmitting, to the device, a request to change input means for controlling the peer device from the touch mouse to the keyboard or the microphone.

In accordance with another aspect of the present disclosure, a peer device for sharing a web page is provided. The peer device comprises: a display unit; a communication unit; and a controller. The controller is configured to: control the communication unit to transmit a signal to a device for indicating that the web page can be displayed by the display unit of the peer device, control the communication unit to receive a sharing request signal including location information of the web page from the device, display, on the display unit, the web page after receiving the sharing request signal using the location information, control the communication unit to transmit information including that the peer device supports inputs based on a touch mouse, a keyboard, and a microphone, control the communication unit to receive a control signal associated with the touch mouse from the device, control the display unit to control the displayed web page in accordance with the control signal, and control the communication unit to transmit a request to change input means for controlling the peer device from the touch mouse to the keyboard or the microphone.

In accordance with another aspect of the present disclosure, a device apparatus for receiving a request to share web contents is provided. The apparatus includes a controller for controlling a function of transmitting to a peer device a signal for indicating that the web contents can be shared, receiving a sharing request signal including location information of the web contents from the peer device, and reproducing the web contents by receiving the web contents by using the location information, and a communication unit for transmitting and receiving a signal with respect to a peer device under the control of the controller.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### Brief Description of Drawings

For a more complete understanding of the present disclosure and its advantages, reference is now made to the following description taken in conjunction with the accompanying drawings, in which like reference numerals represent like parts:
FIGURE 1 illustrates a system for sharing a web page between devices according to an exemplary embodiment of the present disclosure;
FIGURE 2 is a flowchart illustrating a process of sharing a web page between devices according to an exemplary embodiment of the present disclosure;
FIGURE 3 is a block diagram illustrating a structure of a mobile terminal according to an exemplary embodiment of the present disclosure;
FIGURE 4 is a block diagram illustrating a structure of a sharing device according to an exemplary embodiment of the present disclosure;
FIGURE 5 is a flowchart illustrating an operation of a mobile terminal for sharing a web page according to an exemplary embodiment of the present disclosure;
FIGURE 6 is a flowchart illustrating an operation of a device for sharing a web page according to an exemplary embodiment of the present disclosure;
FIGURES 7A and 7B illustrate a screen configuration for sharing a web page according to an exemplary embodiment of the present disclosure; and
FIGURES 8A to 8C illustrate an example of controlling a device by a mobile terminal which operates as an input element according to an exemplary embodiment of the present disclosure.

### Best Mode for Carrying out the Invention

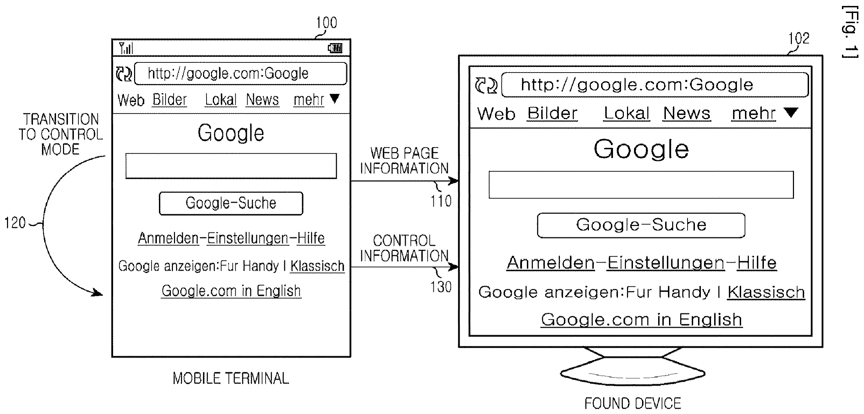

FIGURES 1 through 8C, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged network. Exemplary embodiments of the present disclosure will be described herein below with reference to the accompanying drawings. In the following description, well-known functions or constructions are not described in detail since they would obscure the subject matter of the present disclosure with unnecessary detail. Also, the terms used herein are defined according to the functions of the present disclosure. Thus, the terms may vary depending on user's or operator's intention and usage. That is, the terms used herein must be understood based on the descriptions made herein.

A Digital Living Network Alliance (DLNA) network has drawn attention as a home network system. The DLNA network connects a plurality of digital devices to each other through a Wireless Local Area Network (WLAN), and allows to share various contents (e.g., music, photos, movies, etc.) stored in the respective digital devices. Therefore, a mobile terminal which supports the DLNA network can share contents desired by a user in such a manner that the mobile terminal detects all devices connected to a network accessed by the mobile terminal through the WLAN according to a DLNA service request of the user and receives desired contents from the detected devices or transmits contents stored in the mobile terminal to the detected devices.

In particular, in one possible method, the mobile terminal directly transmits contents being reproduced in the device of the mobile terminal to a peer device so that the contents are reproduced in the peer device. Although this method has an advantage in that the contents of the mobile terminal can be reproduced in another device, it has a limitation in satisfying various demands of the user. For example, when assuming a case where the mobile terminal delivers an image displayed on a screen to a TV and displays the image according to the conventional method, since the image has a resolution suitable for a screen size of the mobile terminal, there is a problem in that the user feels as if the image displayed on the TV is not intact.

In addition, there is another problem in that a Universal Plug and Play (UPnP) protocol used in DLNA networks is not suitable for data processing that requires a fast response on a real-time basis.

The present disclosure relates to a technique by which web contents are shared between devices, and one device controls other devices when sharing web content. The web content includes all content having a Uniform Resource Locator (URL) on a web. Examples of the web content include a web page, a web magazine (or an e-magazine), a web video, a web game, etc. For convenience of explanation, the present disclosure uses the web page as an example. However, the principles of the present disclosure apply equally to all content provided on the web. In addition, for convenience of explanation, it will be assumed in the present disclosure that a device that requests to share the web content is a mobile terminal. However, the principles of the present disclosure apply equally to a case of sharing web content with a device other than a mobile terminal. The mobile terminal may be a mobile device operating within a Digital Living Network Alliance (DLNA) network together with a DLNA device. Examples of the mobile terminal include a smart phone, a tablet Personal Computer (PC), a notebook PC, etc. The DLNA device may be an in-door digital device. Examples of the DLNA device include a Television (TV), a PC, etc.

FIGURE 1 illustrates a system for sharing a web page between devices according to an exemplary embodiment of the present disclosure.

Referring to FIGURE 1, a mobile terminal 100 transmits a signal for searching for a device which supports a function of sharing web contents, and searches for a neighboring device 102 which supports the function of sharing the web page. Thereafter, the mobile terminal 100 transmits a web page sharing request signal including web page information to the found device 102 according to a user request (step 110). Herein, the web page information implies location information (i.e., a URL) of the web page. Thereafter, the mobile terminal 100 transitions to a control mode for operating as an input element of the found device 102 (step 120), and transmits control information corresponding to user input data to the found device 102. Herein, the user input data implies a user's operation and voice that can be detected by using various sensors in the mobile terminal. For example, the user input data implies at least one of a user's touch coordinate which is input by using a touch sensor, a user motion vector detected by using a gyro sensor and an acceleration sensor, a user voice signal which is input by using a microphone sensor, and a motion vector depending on a change in an image which is input by using a camera sensor.

Upon receiving a device search signal which supports a web page sharing function from the mobile device 100, the device 102 transmits a response signal for the received signal to the device. Thereafter, the device 102 receives a web page sharing request signal including web page information from the mobile terminal 100 (step S110). Herein, the web page information implies a URL of the web page. Thereafter, the device 102 accesses to the URL of the web page by executing a web browser at the request of the mobile terminal 100, loads the web page, and displays the web page on a screen. In this case, the web page displayed on the screen of the device 102 has a resolution optimized to a screen size of the device 102. That is, the device 102 may load a web page having a resolution corresponding to the screen size of the device 102 from the URL through the web browser, or may load the web page from the URL and then display the web page by changing a resolution of the loaded web page into a resolution corresponding to the screen size of the device 102. As such, the device 102 can provide a high-quality image to a user by displaying the web page having the resolution corresponding to the screen size. After displaying the web page, the device 102 performs an operation of receiving control information from the mobile terminal 100 and controlling the web page according to the received control information. For example, according to the control information received from the mobile terminal 100, the device 102 can perform an operation of moving a mouse cursor on the web page or inputting a character into a character input window of the web page.

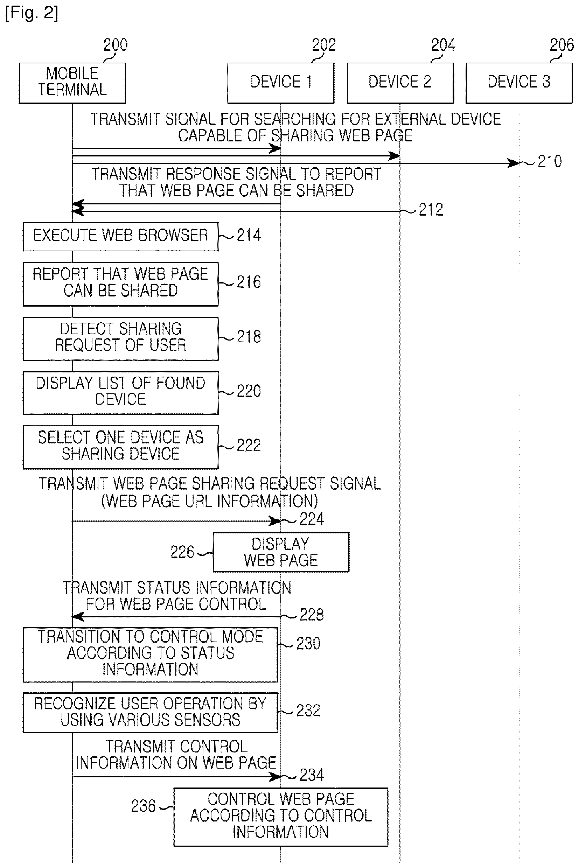

FIGURE 2 is a flowchart illustrating a process of sharing a web page between devices according to an exemplary embodiment of the present disclosure.

Referring to FIGURE 2, a mobile terminal 200 transmits a signal for searching for a device capable of sharing the web page in step 210. Then, devices 202 to 206 connected to the same DLNA network as the mobile terminal 200 receive the signal for searching for the device capable of sharing the web page, and determine whether the devices support a web page sharing function. If it is assumed that the device #1 202 and the device #2 204 support the web page sharing function, in step 212, the device #1 202 and the device #2 204 transmit a response signal to the mobile terminal 200 to report that web page can be shared. In this case, the mobile terminal 200 recognizes that the device #1 202 and the device #2 204 support the web page sharing function, and generates a device list including the device #1 202 and the device #2 204.

Thereafter, when a web browser is executed in step 214 according to a user control, the mobile terminal 200 loads a specific web page and displays the web page on a screen. In step 216, the mobile terminal 200 reports to the user that the web page can be shared. In this case, the mobile terminal 200 may display an icon or message for indicating that the web page can be shared on the screen or may generate a predetermined alarm sound. Thereafter, when a web page sharing request of the user is detected in step 218, the mobile terminal 200 displays the pre-generated device list on the screen in step 220, and proceeding to step 222, selects one device according to the user control. Herein, when the user selects a sharing icon displayed on the screen or inputs a predetermined function key or a voice signal, the mobile terminal 200 may detect that sharing of the web page is requested by the user. In addition, when only one device exists in the pre-generated device list, the mobile terminal 200 may skip the steps 220 and 222.

In step 224, the mobile terminal 200 transmits a web page sharing request signal including URL information on the web page to the selected device #1202. Then, upon receiving the web page sharing request signal, the device #1 202 executes a web browser in step 226, and loads a corresponding web page by accessing to a URL for the web page through the web browser, and thereafter displays a web page having a resolution corresponding to a screen size of the device #1 202 on the screen. Herein, the resolution corresponding to the screen size may be an optimal resolution recommended and supported by the device #1 202 and determined in the designing of the device #1 202, or may be a resolution configured to the resolution of the device #1 202 by the user. In step 228, the device #1 202 confirms status information for the web page control, and transmits the status information to the mobile terminal 200. Herein, the status information for the web page control may be information on whether the web browser is normally executed, information on whether the web page is completely loaded, and information on a supported input means. Herein, the supported input means implies an input means that can be supported by the device #1 202 among several input means such as a touch mouse, a motion mouse, a keyboard (or a keypad or a touch pad), a microphone, etc.

In step 230, the mobile terminal 200 analyzes the status information received from the device #1 202 to determine whether the device #1 202 has successfully loaded the web page, and if it is determined that the loading is successful, transitions to a control mode supported by the device #1 202. For example, when the device #1 202 supports a touch mouse and a keyboard as an input means, the mobile terminal 200 can transition to a control mode for operating as the touch mouse or a control mode for operating as the keyboard. Herein, if it is determined that the device #1 202 fails to successfully load the web page due to an abnormal operation of the web browser as a result of analyzing the status information, the mobile terminal 200 may retransmit a web page sharing request signal to the device #1 202 or may report a web page sharing failure to the user.

Upon transitioning to the control mode, the mobile terminal 200 recognizes a user operation and voice corresponding to the control mode by using various sensors equipped in the mobile terminal in step 232, and transmits control information on the web page to the device #1 202 in step 234. For example, in case of the control mode in which the mobile terminal operates as the touch mouse, the mobile terminal 200 displays a message for indicating that it operates as the touch mouse on the screen, and detects a touch coordinate of the user by using a touch sensor and transmits the detected touch coordinate to the device #1 202. In this case, the mobile terminal 200 may transmit the detected touch coordinate directly to the device #1202, or may transmit the detected touch coordinate by changing it by the use of a screen coordinate of the device #1 202 or a predetermined command (e.g., screen zoom in/out, screen rotation, go back to previous page, color change, etc.). For another example, in case of the control mode in which the mobile terminal 200 operates as a motion mouse, the mobile terminal 200 may calculate a motion vector by detecting a motion of the mobile terminal according to a user operation by using a gyro sensor and an acceleration sensor, and may transmit the motion vector directly to the device #1 202 or may transmit the motion vector to the device #1 202 by changing it on the basis of a coordinate of the screen or a predetermined command.

In step 236, the device #1 202 controls the web page according to the control information. For one example, when coordinate data is received from the mobile terminal 200, the device #1 202 displays a mouse cursor for controlling the web page by moving the cursor to a location corresponding to the coordinate data. For another example, when character data is received from the mobile terminal 200, the device #1 202 performs a function of inputting the received character data into a character input window of the displayed web page. For another example, if a screen zoom in/out command is received from the mobile terminal 200, the device #1 202 performs a function of displaying the web page by increasing or decreasing the web page.

Although not shown herein, the device #1 202 may determine whether the input means needs to be changed, and then may request the mobile terminal 200 to change the input means. For example, if the mouse cursor exists in the character input window of the web page while the device #1 202 performs an operation for controlling the web page according to control information of the mobile terminal 200 which operates as the motion mouse, the mobile terminal 200 can be requested to transition to a microphone or keyboard operation mode for inputting a character.

In addition, although signals transmitted and received for sharing a web page between the mobile terminal 200 and the device may use a Universal Plug and Play (uPnP) protocol in steps 210, 212, 224, and 228, a signal transmitted and received for web page control needs to use a non-uPnP protocol. This is because the uPnP is not suitable for data processing which requires a fast response on a real-time basis.

In addition, although it is described above that the respective devices examine whether the devices support the web paging sharing function and then transmit a response signal to the mobile terminal, the present disclosure is not limited thereto. Thus, according to a design rule, when functions supported by the respective devices are transmitted to the mobile terminal, the mobile terminal may analyze the functions supported by the respective devices to identify devices which can share a web page.

Now, a structure and operation of a mobile terminal and a device according to the present disclosure will be described on the basis of the aforementioned explanations.

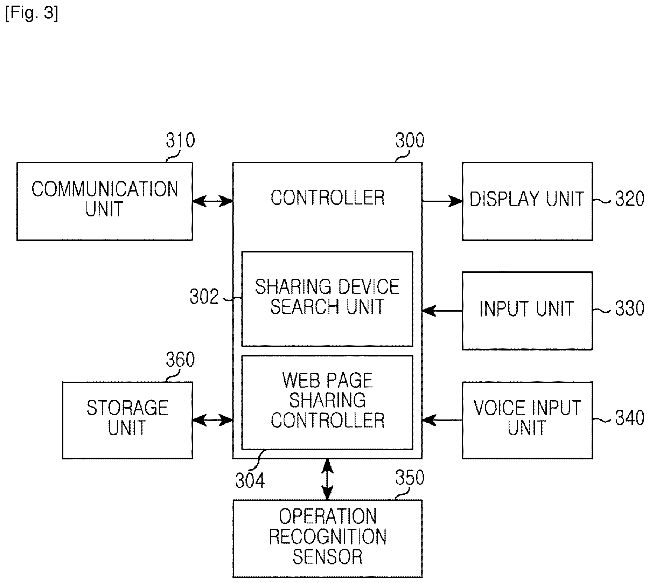

FIGURE 3 is a block diagram illustrating a structure of a mobile terminal according to an exemplary embodiment of the present disclosure.

Referring to FIGURE 3, the mobile terminal includes a controller 300, a communication unit 310, a display unit 320, an input unit 330, a voice input unit 340, an operation recognition sensor 350, and a storage unit 360. In particular, the controller 300 includes a sharing device search unit 302 and a web page sharing controller 304.

First, the controller 300 controls and processes an overall operation of the mobile terminal, and according to the present disclosure, controls and processes a function for sharing a web page. That is, the controller 300 searches for neighboring devices capable of sharing the web page by using the sharing device search unit 302. Further, the controller 300 transmits web page information by selecting a web page sharing device on the basis of the found devices by using the web page sharing controller 304, and controls and processes a function for operating as an input element of the device.

More specifically, the sharing device search unit 302 controls the communication unit 310 to control and process a function of searching for a device capable of sharing a web page from devices connected to a DLNA network to which the mobile terminal is currently accessed. In this case, the sharing device search unit 302 may transmit a signal for searching for a device capable of sharing a web page to the devices connected to the DLNA network, and may determine devices which transmit a response signal for the device search signal as the device capable of sharing the web page. Further, the sharing device search unit 302 may transmit a signal for requesting information on a supportable service function to the devices connected to the DLNA network, may receive a signal for reporting a supportable service function from each of the devices, and thereafter may search for a device which supports a web page sharing function by using the signal for reporting the supportable service function. Herein, the sharing device search unit 302 may import a predetermined API set to search for a device which supports a web page sharing function. For example, the sharing device search unit 302 may use a UPnP or non-UPnP-based API to transmit to devices connected to the DLNA network a signal for requesting a search for a device capable of sharing a web page. In addition, the sharing device search unit 302 may use a Web Browser Enable Device List signal for generating a list of devices capable of sharing a web page to receive and analyze a response signal with respect to a signal for searching for the device capable of searching for the web page. Thus, the sharing device search unit 302 may acquire information of the device which supports the web page sharing function.

When the device capable of sharing the web page is found, the sharing device search unit 302 generates a sharing device list including the found devices, and stores the sharing device list into the storage unit 360. Herein, the device search and list generation function of the sharing device search unit 302 can be performed with a specific period in a situation where the mobile terminal is currently connected to the DLNA network, and may be performed whenever a new device is connected to or disconnected from the DLNA network.

When a web browser is executed by the user, the web page sharing controller 304 controls and processes a function for loading a specific web page and displays the web page on a screen, confirming the sharing device list stored in the storage unit 360, and reporting whether the web page can be shared to the user. The web page sharing controller 304 may control the display unit 320 to display an icon or message for indicating that the web page can be shared, or may control an audio output unit (not shown) to generate an alarm sound for indicating that the web page can be shared. When a web page sharing request of the user is detected by using the input unit 330, the web page sharing controller 304 displays the sharing device list on the screen, and determines a sharing device according to a user control. Herein, the web page sharing controller 304 may import a predetermined API set to display a sharing device list on a screen. For example, the web page sharing controller 304 may provide a high-level application (e.g., a web browser) with a Web Browser Enable Device Request including a sharing device list to display the sharing device list on the screen.

When the sharing device is determined, the web page sharing controller 304 controls and processes a function for transmitting to a selected device a web page sharing request signal including URL information for a web page currently being displayed. Thereafter, when status information including information on web page loading and information on a supported input means is received from the device, the web page sharing controller 304 transitions to a control mode for operating as a supported input means of the device to control and process a function of recognizing a user's voice or operation according to the control mode and of generating control information and transmitting the generated control information to the device. That is, the web page sharing controller 304 recognizes the user's voice by using the voice input unit 340 according to the control mode or recognizes a user's touch and motion by using the operation recognition sensor 350, and generates control information on the basis of the recognition result and then transmits the generated control information to the device. In this case, the web page sharing controller 304 may directly transmit the recognition result to the sharing device, or may convert the recognition result into data having a format that can be processed by the sharing device and then transmit the data to the sharing device. For example, if the sharing device is a device capable of performing a complex computation, the web page sharing controller 304 directly transmits the recognition result so that it can be converted into a format desired by the sharing device. Otherwise, if the sharing device is not capable of performing the complex computation, the web page sharing controller 304 may transmit the recognition result by converting it into the format desired by the sharing device. Herein, the web page sharing controller 304 transmits a URL to the sharing device on the basis of a predetermined API and action function, and thus controls the sharing device to execute a web browser and to load the URL. For example, a predetermined GetCurrentURL function is used to acquire URL information on a web page currently being displayed in the mobile terminal, and thereafter a RunBrowser(URL) API including the acquired URL information is used to deliver the URL information to the sharing device. In addition, the web page sharing controller 304 may use a BrowserStateEvent API to receive status information from the device, and may use a Device State function to acquire the received status information. Further, the web page sharing controller 304 may analyze data which is input by using at least one sensor included in the mobile terminal to process the data into data or commands for indicating an event desired by a user, and may deliver SendCommand(CMD) including the processed data or commands to the sharing device to control a web page display of the sharing device. Furthermore, the web page sharing controller 304 may use EnventListener to receive information on an event generated by the sharing device.

The communication unit 310 performs a function for transmitting and receiving a signal with respect to a neighboring device under the control of the controller 300. That is, the communication unit 310 performs a function for transmitting and receiving a signal to connect a DLNA network under the control of the controller 300, searching for a device which can share a web page among neighboring devices connected to the DLNA network, transmitting and receiving a signal for sharing the web page with the found device, and transmitting control information to the device which shares the web page.

The display unit 320 displays a variety of status information, characters, and images generated while the mobile terminal is operating. When a web browser is executed under the control of the controller 300, the display unit 320 displays the web page, and displays an icon or message for reporting that the web page can be shared. The display unit 320 performs a screen display corresponding to a control mode currently being operated under the control of the controller 300. For example, in a mode in which the mobile terminal operates as a keyboard for a peer device, the display unit 320 may display a character input screen configured similarly to the keyboard, and in a mode in which the mobile terminal operates as a motion mouse for the peer device, may display a screen including the mouse. Herein, a display image of the display unit 320 based on the control mode according to which the mobile terminal operates can variously change depending on a design rule.

The input unit 330 includes at least one of a function key and a touch sensor, and provides the controller 300 with data corresponding to a key pressed by the user or a coordinate corresponding to a position touched by the user.

The voice input unit 340 receives a user's voice signal and converts it into a digital signal, and thereafter provides the converted signal to the controller 300.

The operation recognition sensor 350 implies various sensors for recognizing a user's operation, and includes a sensor capable of detecting a user's motion. Examples of the sensor include a gyro sensor, an acceleration sensor, a touch sensor, and a camera sensor. The operation recognition sensor 350 is driven under the control of the controller 300, and recognizes a user's touch operation, or detects a terminal's direction, angle, acceleration variation, etc., caused by the user's motion and provides the detection result to the controller 300.

The storage unit 360 stores various programs and data required for an operation of the mobile terminal, and according to the present disclosure, stores a sharing device list provided from the controller 300. Herein, the sharing device list may be updated every specific period under the control of the controller 300. The sharing device list includes a device IDentifier (ID) and a device name, and may include a variety of information required for communication with a corresponding device.

The method described above in relation with FIG. 1 under of the present invention may be provided as one or more instructions in one or more software modules stored in the respective mobile terminals.

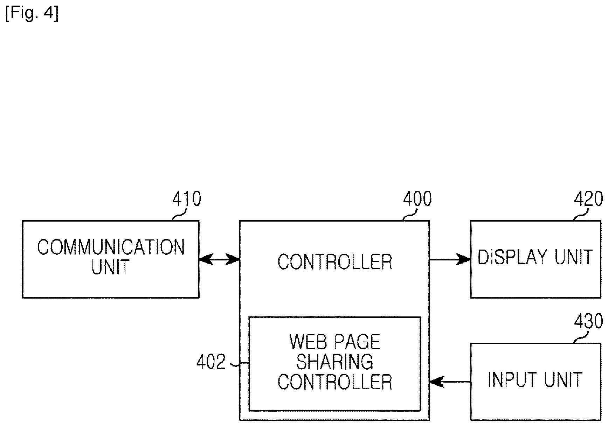

FIGURE 4 is a block diagram illustrating a structure of a sharing device according to an exemplary embodiment of the present disclosure.

Referring to FIGURE 4, the device includes a controller 400, a communication unit 410, a display unit 420, and an input unit 430. In particular, the controller 400 includes a web page sharing controller 402.

The controller 400 controls and processes an overall operation of the device, and according to the present disclosure, controls and processes a function for sharing a web page of a mobile terminal. That is, after reporting to the mobile terminal that the web page can be shared by using the web page sharing controller 402, the controller 400 controls and processes a function for receiving information on the web page from the mobile terminal and displaying the web page on a screen, and receiving control information from the mobile terminal and performing a control operation for the web page.

More specifically, when a signal for searching for a device which can share the web page is received from the mobile terminal through the communication unit 410, the web page sharing controller 402 controls and processes a function for transmitting a response signal for reporting that the web page can be shared to the mobile terminal. In this case, the web page sharing controller 402 may transmit a signal for reporting a service function that can be supported by the device.

When a web page sharing request signal including URL information for the web page is received from the mobile terminal, the web page sharing controller 402 controls and processes a function for loading the web page by accessing to the URL through a web browser and thereafter displaying the web page by using the display unit 420. In this case, the web page sharing controller 402 controls and processes a function for generating status information indicating whether the web browser is normally executed, whether the web page is completely loaded, and a supported input means, and transmitting the generated information to the mobile terminal. Herein, the input means may be a touch mouse, a motion mouse, a keyboard (or a keypad or a touch pad), a microphone, etc. The web page sharing controller 402 controls and processes a function for transmitting information on the input means supported by the device to the mobile terminal among the aforementioned input means.

In addition, when the control information is received from the mobile terminal, the web page sharing controller 402 performs a function for controlling the web page according to the control information. For one example, when coordinate data is received from the mobile terminal, the web page sharing controller 402 controls and processes a function for displaying a mouse cursor which controls the web page by moving the mouse cursor to a position corresponding to the coordinate data, and when character data is received from the mobile terminal 200, the web page sharing controller 402 controls and processes a function for inputting the received character data into a character input window of the displayed web page. For another example, when a screen zoom in/out command is received from the mobile terminal, the web page sharing controller 402 controls and processes a function for displaying the web page by increasing or decreasing the web page.

The communication unit 410 performs a function for transmitting and receiving a signal with respect to a neighboring device under the control of the controller 400. In particular, the communication unit 410 performs signal transmission and reception for connecting a DLNA network under the control of the controller 400, and transmits a signal for reporting that the web page can be shared to the mobile terminal connected to the DLNA network. In addition, the communication unit 410 performs a function for receiving web page control information and a web page sharing request signal including information on the web page from the mobile terminal and for providing the received information and signal to the controller 400.

The display unit 420 displays a variety of status information, characters, and images generated while the device is operating, and according to the control of the controller 400, displays a web page corresponding to a URL received from the mobile terminal. In this case, under the control of the controller 400, the display unit 420 displays a web page having a resolution corresponding to a screen size of the device. In addition, under the control of the controller 400, the display unit 420 performs a function for displaying a mouse cursor which controls the web page by moving the mouse cursor to a coordinate corresponding to control information of the mobile terminal or for displaying a character corresponding to the control information of the mobile terminal into a character input window of the web page.

The input unit 430 includes at least one of a function key and a touch sensor, and provides the controller 400 with data corresponding to a key pressed by the user or a coordinate corresponding to a position touched by the user.

The method described above in relation with FIG. 1 under of the present invention may be provided as one or more instructions in one or more software modules stored in the respective device.

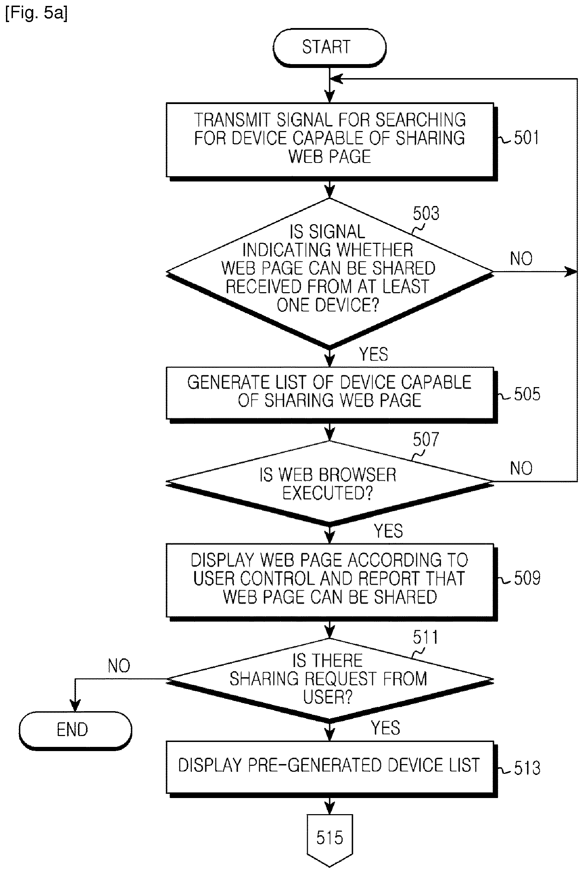

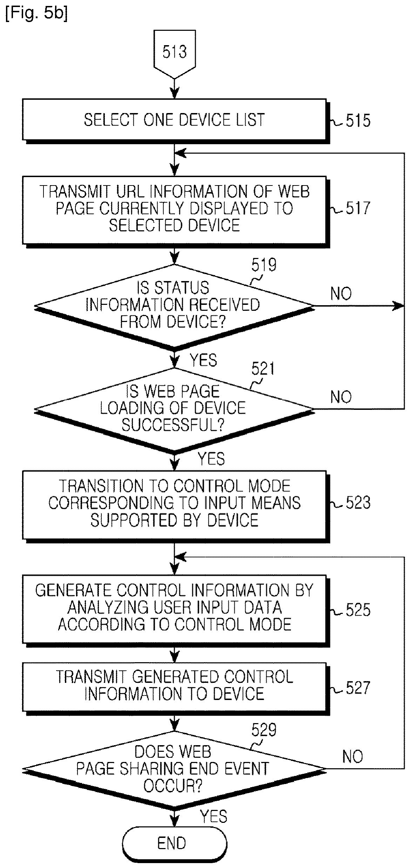

FIGURE 5 is a flowchart illustrating an operation of a mobile terminal for sharing a web page according to an exemplary embodiment of the present disclosure.

Referring to FIGURE 5, the mobile terminal transmits a signal for searching for a device which can share the web page in step 501. In this case, the signal for searching for the device which can share the web page is transmitted to devices connected to a DLNA network to which the mobile terminal is connected. In step 503, the mobile terminal determines whether a signal for indicating that the web page can be shared is received from at least one device. If the signal for indicating that the web page can be shared is not received from the at least one device, the mobile terminal waits by a predetermined time. Then, returning to step 501, the subsequent steps are repeated.

Otherwise, if the signal for indicating that the web page can be shared is received from the at least one device, proceeding to step 505, the mobile terminal confirms devices which can share the web page on the basis of the received signal, and generates and stores a sharing device list including the confirmed devices.

In step 507, the mobile terminal determines whether a web browser is executed according to a user control. If the web browser is not executed, the mobile terminal waits by a predetermined time. Then, returning to step 501, the subsequent steps are repeated.

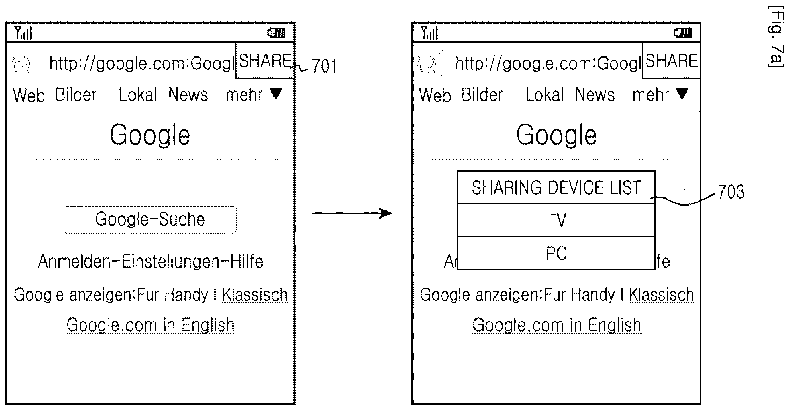

Otherwise, if the web browser is executed, in step 509, the mobile terminal displays a web page according to a user control, and reports to the user that the web page can be shared. In this case, the mobile terminal 200 may display an icon or message on a screen to indicate that the web page can be shared, or may generate a predetermined alarm sound. For example, as illustrated in FIGURE 7A, the mobile terminal displays an icon 701 for reporting that the web page can be shared at a specific position of the screen on which the web page is displayed.

In step 511, the mobile terminal determines whether sharing of the web page is requested by the user. That is, the mobile terminal selects the icon 701 displayed on the screen or determines whether a function key predetermined to share the web page is input by the user. If the user does not request the sharing of the web page, the procedure of FIGURE 5 ends.

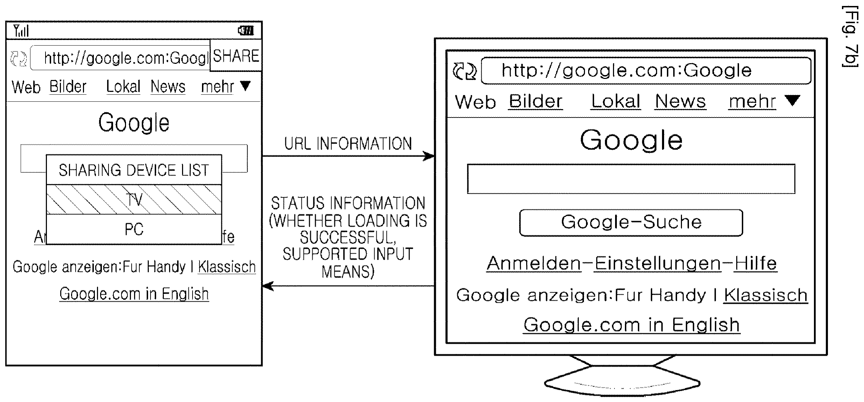

Otherwise, if the sharing of the web page is requested by the user, proceeding to step 513, the mobile terminal displays the pre-generated sharing device list on the screen. For example, as illustrated in FIGURE 7A, the mobile terminal displays a sharing device list 703 at a position of the screen on which the web page is displayed. In step 515, the mobile terminal selects one device for sharing the web page from devices included in the sharing device list according to the user control. For example, as illustrated in FIGURE 7B, the mobile terminal can select a TV according to the user control. Herein, in a case where one device exists in the sharing device list, if the user requests the sharing of the web page, the procedure may directly proceed to step 517 by skipping steps 513 and 515.

In step 517, the mobile terminal requests to share the web page by transmitting a signal including URL information for the web page currently being displayed. In step 519, the mobile terminal determines whether status information for controlling the web page is received from the device. If the status information is not received, returning to step 517, the mobile terminal may retransmit the web page sharing request signal to the device. If the status information is received, proceeding to step 521, the mobile terminal determine whether loading of the web page is successfully completed by the device. If the loading of the web page is not successfully completed by the device, returning to step 517, the mobile terminal may retransmit the web page sharing request signal. Herein, if the device continuously fails to load the web page, the mobile terminal may report to the user that the web page cannot be shared with the device, and may request to select another device to share the web page. For example, as illustrated in FIGURE 7B, the mobile terminal may transmit URL information of a current web page to a TV selected by the user, and may receive status information for controlling the web page and including whether the web page is successfully loaded, a supported input means, etc.

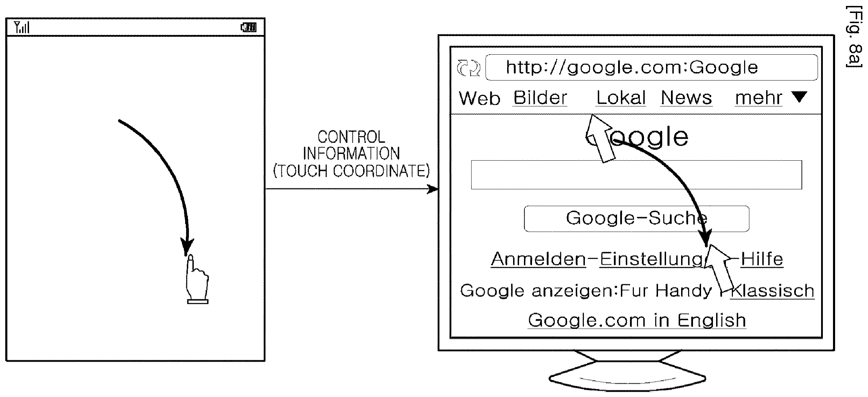

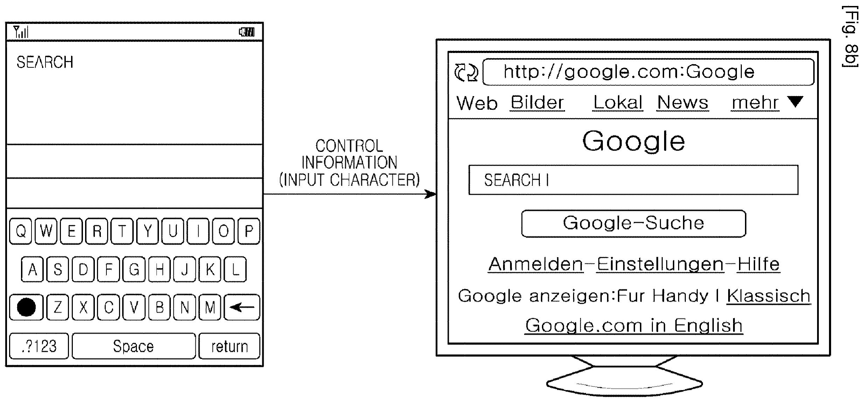

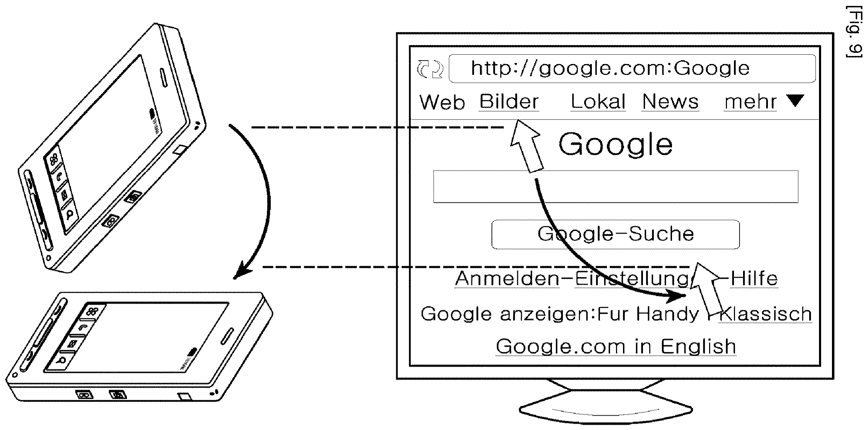

If the loading of the web page is successfully completed by the device, proceeding to step 523, in order to operate as an input element of the device, the mobile terminal determines an input means supported by the device, and transitions to a control mode corresponding to any one of input means supported by the device. In step 525, the mobile terminal analyzes user data which is input by using various sensors according to the transitioned control mode. In step 527, the mobile terminal transmits the control information to the device. For example, when the TV supports input means of a touch mouse, a keyboard, and a motion mouse, the mobile terminal can operate by transitioning to a corresponding control mode as illustrated in FIGURE 8A to FIGURE 8C. That is, the mobile terminal transitions to a control mode for operating as the mouse touch, and as illustrated in FIGURE 8A, detects a screen touch operation of the user and transmits a touch coordinate to the TV which is a sharing device. In this case, the TV can display a mouse cursor for controlling the web page by moving the mouse cursor according to the touch coordinate. In addition, the mobile terminal transitions to a control mode for operating as a keyboard for the TV, displays a keyboard for inputting a character on a screen as illustrated in FIGURE 8B, and transmits a character at a position touched by the user to the TV which is a sharing device. In this case, the TV may display a character received from the mobile terminal in a character input window, and may perform a web search function by using the displayed character. In addition, the mobile terminal transitions to a control mode for operating as a motion mouse for the TV, generates a motion vector by measuring a terminal's motion (i.e., a terminal's direction, angle, and acceleration) depending on a user motion as illustrated in FIGURE 8C, and transmits the generated motion vector to the TV which is a sharing device. In this case, the TV may move a mouse cursor for controlling the web page according to the motion vector received from the mobile terminal. Of course, in this case, the mobile terminal may transmit the motion vector by converting it into a coordinate suitable for a screen size of the TV. In addition, the mobile terminal may display a mouse on the screen, and when the user touches a left button of the mouse or a right button of the mouse, may transmit a predetermined command (e.g., selection, additional function display, etc.) for the corresponding button to the TV. In addition, although not shown, the mobile terminal may generate control information by recognizing motion or color information by using a camera sensor, and may transmit the control information to the TV.

In step 529, the mobile terminal determines whether a web page sharing end event occurs according to a user control. If the web page sharing end event dost not occur, returning to step 525, the subsequent steps are repeated. In this case, although not shown in FIGURE 5, the mobile terminal may operate by transitioning to another control mode at the request of the device, or may operate by transitioning to another control mode at the request of the user.

Otherwise, if the web page sharing end event occurs, the mobile terminal transmits a signal for reporting the end of the web page sharing to the device, and the procedure of FIGURE 5 ends.

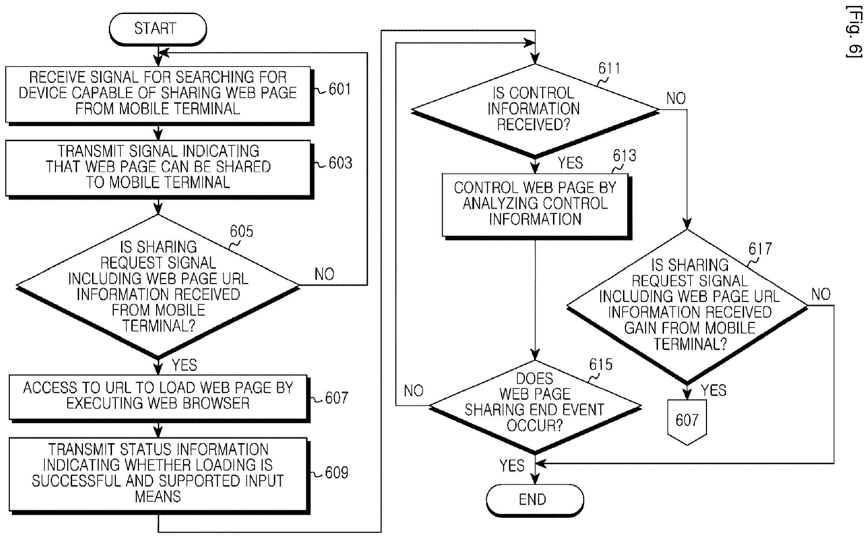

FIGURE 6 is a flowchart illustrating an operation of a device for sharing a web page according to an exemplary embodiment of the present disclosure.

Referring to FIGURE 6, the device receives a signal for searching for a device which can share the web page from a mobile terminal in step 601. In step 603, the device transmits to the motile terminal a signal for reporting that the device is capable of sharing the web page.

In step 605, the device determines whether a web page sharing request signal including a web page URL is received from the mobile terminal. If the web page sharing request signal is not received from the mobile terminal, the devices waits by a predetermined time. Then, returning to step 601, the subsequent steps are repeated.

Otherwise, if the web page sharing request signal is received, in step 607, the device executes a web browser to load a corresponding web page by accessing to a URL received from the mobile terminal. Thereafter, the device displays a web page having a resolution corresponding to a screen size of the device #1 202 on a screen. In step 609, the device transmits status information which indicates whether loading is successful and a supported input means to the mobile terminal. For example, as illustrated in FIGURE 7B, the device receives URL information of a web page from the mobile terminal, loads and displays the web page by accessing to the received URL, and thereafter transmits status information for controlling the web page and including whether the web page is successfully loaded and a supported input means.

In step 611, the device determines whether control information is received from the mobile terminal. If the control information is not received, proceeding to step 617, the device determines whether a sharing request signal including web page URL information is received again from the mobile terminal. In this case, if the sharing request signal is received again, returning to step 607, the subsequent steps are performed again, and otherwise if the sharing request signal is not received again, the procedure of FIGURE 6 ends.

Meanwhile, if the control information is received, in step 613, the device controls the web page by analyzing the control information. For example, if the device is a TV which supports an input means such as a touch mouse, a keyboard, and a motion mouse, as illustrated in FIGURE 8A to FIGURE 8C, the device can control the web page by receiving control information corresponding to the input means from the mobile terminal. That is, as illustrated in FIGURE 8A, the device may receive a touch coordinate from the mobile terminal which operates as a touch mouse, and may display a mouse cursor for controlling the web page by moving the mouse cursor according to the received touch coordinate. In addition, as illustrated in FIGURE 8B, the device may receive character information from the mobile terminal which operates as a keyboard, may display the received character in a character input window of the web page, and may perform a web search function by using the displayed character. In addition, as illustrated in FIGURE 8C, the device may receive a motion vector which indicates a terminal's motion (i.e., a terminal's direction, angle, and acceleration) from the mobile terminal which operates as a motion mouse, and may move the mouse cursor for controlling the web page according to the received motion vector. In addition, although not shown, the device may receive a predetermined command (e.g., selection, additional function display, color change, screen zoom in/out, screen rotation, go back to previous page, etc.) from the mobile terminal, and may perform a corresponding operation.

In step 615, the device determines whether a web page sharing end event occurs. If the web page sharing end event does not occur, returning to step 611, the subsequent steps are repeated, and otherwise if the web page sharing end event occurs, the procedure of FIGURE 6 ends. Herein, the web page sharing end event may occur by receiving a web page sharing end signal from the mobile terminal, and may occur by using an input element equipped in the device.

Although web content is shared between devices, and one device operates as an input element of another device in a structure of the present disclosure described above, the structure in which one device operates as the input element of another device is not limited to a case of sharing the web content. That is, in a situation where communication is possible between devices, the structure in which one device operates as the input element can be applied as described above.

According to the present disclosure, URL information of web content is used to share the web content between devices, and a device which requests to share the web content transitions to a control mode to operate as an input element of a peer device. Therefore, a user can seamlessly enjoy the web content, and can easily control a device which reproduces the web content.

Program instructions to perform a method described herein, or one or more operations thereof, may be recorded, stored, or fixed in one or more computer-readable storage media. The program instructions may be implemented by a computer. For example, the computer may cause a processor to execute the program instructions. The media may include, alone or in combination with the program instructions, data files, data structures, and the like. Examples of computer-readable media include magnetic media, such as hard disks, floppy disks, and magnetic tape; optical media such as CD ROM disks and DVDs; magneto-optical media, such as optical disks; and hardware devices that are specially configured to store and perform program instructions, such as read-only memory (ROM), random access memory (RAM), flash memory, and the like. Examples of program instructions include machine code, such as produced by a compiler, and files containing higher level code that may be executed by the computer using an interpreter. The program instructions, that is, software, may be distributed over network coupled computer systems so that the software is stored and executed in a distributed fashion. For example, the software and data may be stored by one or more computer readable recording mediums. Also, functional programs, codes, and code segments for accomplishing the example embodiments disclosed herein can be easily construed by programmers skilled in the art to which the embodiments pertain based on and using the flow diagrams and block diagrams of the figures and their corresponding descriptions as provided herein. Also, the described unit to perform an operation or a method may be hardware, software, or some combination of hardware and software. For example, the unit may be a software package running on a computer or the computer on which that software is running.

While the subject matter of the present disclosure has been particularly shown and described with reference to exemplary embodiments thereof, it will be understood by those skilled in the art that the present disclosure is defined by the appended claims.

## Claims

1. A method for sharing a web page between a device and peer devices, the method comprising, in the device:
searching for a peer device (operation 210);
transmitting, to the peer device, a sharing request signal requesting the peer device to display the web page (operation 224), wherein the sharing request signal includes location information of the web page;
operating in a first control mode operating as a touch mouse for controlling the peer device (operation 230), in response to transmitting the sharing request signal;
detecting a touch coordinate corresponding to a screen touch operation of a user (operation 232);
transmitting, to the peer device, a control signal corresponding to the detected touch coordinate to move a mouse cursor on the web page displayed on the peer device (operation 234);
receiving, from the peer device, a request to change input means for controlling the peer device; and
in response to receiving the request, transition from the first control mode to a second control mode for inputting characters into a character input window of the web page displayed on the peer device.

2. The method of claim 1, wherein the operating in the first control mode comprises:
after transmitting the sharing request signal to the peer device, receiving information on at least one input means supported by the peer device from the peer device (operation 228); and
operating in the first control mode based on the received information.

3. The method of claim 2, wherein the at least one input means includes at least one of a touch mouse, a motion mouse, a keyboard, and a microphone.

4. The method of claim 1, further comprising:
detecting an audio signal by using a microphone of the device or an input character by using a touch sensor of the device; and
transmitting a control signal corresponding to the detected audio signal or the input character to the peer device to input characters into the character input window of the web page displayed on the peer device.

5. The method of claim 1, further comprising, while the web page is being displayed on the device, providing an indication of a presence of the peer device capable of sharing the web page (operation 216).

6. A method for sharing a web page, the method comprising, at a peer device:
transmitting, to a device, a signal for indicating that the web page can be displayed by the peer device (operation 212);
receiving, from the device, a sharing request signal including location information of the web page;
displaying the web page after receiving the sharing request signal using the location information (operation 226);
transmitting, to the device, information including that the peer device supports inputs based on a touch mouse, a keyboard, and a microphone;
receiving, from the device, a control signal associated with the touch mouse;
controlling the displayed web page in accordance with the control signal (operation 236); and
transmitting, to the device, a request to change input means for controlling the peer device from the touch mouse to the keyboard or the microphone.

7. The method of claim 6, controlling the displayed web page in accordance with the control signal comprises:
moving a position of a mouse cursor controlling the displayed web page based on the control signal.

8. The method of claim 7, transmitting the request to change input means comprises:
in response to the mouse curser being positioned to a character input window of the web page, transmitting the request to change input means from the touch mouse to the keyboard or the microphone.

9. The method of claim 8, further comprising:
receiving, from the device, a control signal corresponding to an audio signal or an input character obtained by the device; and
inputting characters based on the control signal corresponding to an audio signal or an input character into the character input window of the web page.

10. The method of claim 6, wherein displaying the web page comprises:
displaying the web page having a resolution corresponding to a screen size of the peer device.

11. A device (200) for sharing a web page between the device and peer devices, the device comprising
an input unit (330) including a touch sensor;
a communication unit (310); and
a controller (300) configured to:
control the communication unit (310) to search for a peer device (202, 204, 206);
control the communication unit (310) to transmit a sharing request signal requesting the peer device to display the web page, wherein the sharing request signal includes location information of the web page to the peer device;
operate in a first control mode operating as a touch mouse for controlling the peer device, in response to transmitting the sharing request signal;
control the touch sensor to detect a touch coordinate corresponding to a screen touch operation of a user;
control the communication unit (310) to transmit a control signal corresponding to the detected touch coordinate to the peer device to move a mouse cursor on the web page displayed on the peer device;
control the communication unit (310) to receive a request to change input means for controlling the peer device from the peer device; and
in response to receiving the request, transition from the first control mode to a second control mode for inputting characters into a character input window of the web page displayed on the peer device.

12. The device of claim 11, the device arranged to implement a method of one of claims 2 to 5.

13. A peer device (202, 204, 206) for sharing a web page, the peer device comprising:
a display unit (420);
a communication unit (410); and
a controller (400) configured to:
control the communication unit (410) to transmit a signal to a device (200) for indicating that the web page can be displayed by the display unit (420) of the peer device,
control the communication unit (410) to receive a sharing request signal including location information of the web page from the device,
display, on the display unit (420), the web page after receiving the sharing request signal using the location information,
control the communication unit (410) to transmit information including that the peer device supports inputs based on a touch mouse, a keyboard, and a microphone,
control the communication unit (410) to receive a control signal associated with the touch mouse from the device,
control the display unit (420) to control the displayed web page in accordance with the control signal, and
control the communication unit (410) to transmit a request to change input means for controlling the peer device from the touch mouse to the keyboard or the microphone.

14. The peer device of claim 13, the device arranged to implement a method of one of claims 7 to 10.

## Patentansprüche

1. Verfahren zum gemeinsamen Benutzen einer Webseite zwischen einem Gerät und Peer-Geräten, wobei das Verfahren in dem Gerät umfasst:
Suchen nach einem Peer-Gerät (Operation 210);
Übertragen eines Freigabeanforderungssignals an das Peer-Gerät, das das Peer-Gerät auffordert, die Webseite anzuzeigen (Operation 224), wobei das Freigabeanforderungssignal Standortinformationen der Webseite umfasst;
Arbeiten in einem ersten Steuermodus, der als Berührungsmaus zum Steuern des Peer-Geräts arbeitet (Operation 230), als Reaktion auf das Übertragen des Freigabeanforderungssignals;
Erfassen einer Berührungskoordinate, die einer Bildschirmberührungsoperation eines Benutzers entspricht (Operation 232);
Übertragen eines Steuersignals, das der erfassten Berührungskoordinate entspricht, an das Peer-Gerät, um einen Mauscursor auf der Webseite zu bewegen, die auf dem Peer-Gerät angezeigt wird (Operation 234);
Empfangen, von dem Peer-Gerät, einer Aufforderung zum Ändern eines Eingabemittels zum Steuern des Peer-Geräts; und
als Reaktion auf das Empfangen der Aufforderung, Übergang vom ersten Steuermodus in einen zweiten Steuermodus zum Eingeben von Zeichen in ein Zeicheneingabefenster der Webseite, die auf dem Peer-Gerät angezeigt wird.

2. Verfahren nach Anspruch 1, wobei das Arbeiten im ersten Steuermodus umfasst:
nach dem Übertragen des Freigabeanforderungssignals an das Peer-Gerät, Empfangen von Informationen über mindestens ein Eingabemittel, das von dem Peer-Gerät unterstützt wird, von dem Peer-Gerät (Operation 228); und
Arbeiten im ersten Steuermodus basierend auf den empfangenen Informationen.

3. Verfahren nach Anspruch 2, wobei das mindestens eine Eingabemittel mindestens eines von einer Berührungsmaus, einer Bewegungsmaus, einer Tastatur und einem Mikrofon umfasst.

4. Verfahren nach Anspruch 1, ferner umfassend:
Erfassen eines Audiosignals durch Verwendung eines Mikrofons des Geräts oder eines Eingabezeichens durch Verwendung eines Berührungssensors des Geräts; und
Übertragen eines Steuersignals, das dem erfassten Audiosignal oder dem Eingabezeichen entspricht, an das Peer-Gerät, um Zeichen in das Zeicheneingabefenster der Webseite einzugeben, die auf dem Peer-Gerät angezeigt wird.

5. Verfahren nach Anspruch 1, ferner umfassend, während die Webseite auf dem Gerät angezeigt wird, Bereitstellen eines Hinweises auf ein Vorhandensein des Peer-Geräts, das in der Lage ist, die Webseite gemeinsam zu benutzen (Operation 216).

6. Verfahren zum gemeinsamen Benutzen einer Webseite, wobei das Verfahren an einem Peer-Gerät umfasst: Übertragen eines Signals an ein Gerät, um anzugeben, dass die Webseite durch das Peer-Gerät angezeigt werden kann (Operation 212);
Empfangen eines Freigabeanforderungssignals, das Standortinformationen der Webseite umfasst, von dem Gerät;
Anzeigen der Webseite nach dem Empfangen des Freigabeanforderungssignals unter Verwendung der Standortinformationen (Operation 226);
Übertragen von Informationen an das Gerät, die umfassen, dass das Peer-Gerät Eingaben basierend auf einer Berührungsmaus, einer Tastatur und einem Mikrofon unterstützt;
Empfangen, von dem Gerät, eines Steuersignals, das der Berührungsmaus zugeordnet ist; Steuern der angezeigten Webseite gemäß dem Steuersignal (Operation 236); und Übertragen einer Aufforderung an das Gerät, das Eingabemittel zum Steuern des Peer-Geräts von der Berührungsmaus auf die Tastatur oder das Mikrofon zu ändern.

7. Verfahren nach Anspruch 6, wobei das Steuern der angezeigten Webseite gemäß dem Steuersignal umfasst:
Bewegen einer Position eines Mauscursors, der die angezeigte Webseite steuert, basierend auf dem Steuersignal.

8. Verfahren nach Anspruch 7, wobei das Übertragen der Aufforderung zum Ändern des Eingabemittels umfasst:
als Reaktion darauf, dass der Mauscursor an einem Zeicheneingabefenster der Webseite positioniert ist, Übertragen der Aufforderung zum Ändern des Eingabemittels von der Berührungsmaus auf die Tastatur oder das Mikrofon.

9. Verfahren nach Anspruch 8, ferner umfassend:
Empfangen eines Steuersignals von dem Gerät, das einem Audiosignal oder einem Eingabezeichen entspricht, das von dem Gerät erhalten wird; und
Eingeben von Zeichen basierend auf dem Steuersignal, das einem Audiosignal oder einem Eingabezeichen entspricht, in das Zeicheneingabefenster der Webseite.

10. Verfahren nach Anspruch 6, wobei das Anzeigen der Webseite umfasst:
Anzeigen der Webseite mit einer Auflösung entsprechend einer Bildschirmgröße des Peer-Geräts.

11. Gerät (200) zum gemeinsamen Benutzen einer Webseite zwischen dem Gerät und Peer-Geräten, wobei das Gerät eine Eingabeeinheit (330), die einen Berührungssensor umfasst; eine Kommunikationseinheit (310); und
eine Steuerung (300) umfasst, die konfiguriert ist, um:
die Kommunikationseinheit (310) zu steuern, um nach einem Peer-Gerät (202, 204, 206) zu suchen; die Kommunikationseinheit (310) zu steuern, um ein Freigabeanforderungssignal, das das Peer-Gerät auffordert, die Webseite anzuzeigen, an das Peer-Gerät zu übertragen, wobei das Freigabeanforderungssignal Standortinformationen der Webseite umfasst;
in einem ersten Steuermodus zu arbeiten, der als Berührungsmaus zum Steuern des Peer-Geräts arbeitet, als Reaktion auf das Übertragen des Freigabeanforderungssignals;
den Berührungssensor zu steuern, um eine Berührungskoordinate zu erfassen, die einer Bildschirmberührungsoperation eines Benutzers entspricht;
die Kommunikationseinheit (310) zu steuern, um ein Steuersignal, das der erfassten Berührungskoordinate entspricht, an das Peer-Gerät zu übertragen, um einen Mauscursor auf der Webseite zu bewegen, die auf dem Peer-Gerät angezeigt wird;
die Kommunikationseinheit (310) zu steuern, um eine Aufforderung zum Ändern des Eingabemittels zum Steuern des Peer-Geräts von dem Peer-Gerät zu empfangen; und
als Reaktion auf das Empfangen der Aufforderung, Übergang vom ersten Steuermodus in einen zweiten Steuermodus zum Eingeben von Zeichen in ein Zeicheneingabefenster der Webseite, die auf dem Peer-Gerät angezeigt wird.

12. Gerät nach Anspruch 11, wobei das Gerät angeordnet ist, um ein Verfahren nach einem der Ansprüche 2 bis 5 zu implementieren.

13. Peer-Gerät (202, 204, 206) zum gemeinsamen Benutzen einer Webseite, wobei das Peer-Gerät umfasst: eine Anzeigeeinheit (420);
eine Kommunikationseinheit (410); und eine Steuerung (400), die konfiguriert um:
die Kommunikationseinheit (410) zu steuern, um ein Signal an ein Gerät (200) zu übertragen, um anzugeben, dass die Webseite durch die Anzeigeeinheit (420) des Peer-Geräts angezeigt werden kann,
die Kommunikationseinheit (410) zu steuern, um ein Freigabeanforderungssignal, das Standortinformationen der Webseite umfasst, von dem Gerät zu empfangen,
die Web seite auf der Anzeigeeinheit (420) anzuzeigen, nachdem das Freigabeanforderungssignal unter Verwendung der Standortinformationen empfangen wurde,
die Kommunikationseinheit (410) zu steuern, um Informationen zu übertragen, die umfassen, dass das Peer-Gerät Eingaben basierend auf einer Berührungsmaus, einer Tastatur und einem Mikrofon unterstützt,
die Kommunikationseinheit (410) zu steuern, um ein der Berührungsmaus zugeordnetes Steuersignal von dem Gerät zu empfangen,
die Anzeigeeinheit (420) zu steuern, um die angezeigte Webseite gemäß dem Steuersignal zu steuern, und
die Kommunikationseinheit (410) zu steuern, um eine Aufforderung zum Ändern des Eingabemittels zum Steuern des Peer-Geräts von der Berührungsmaus auf die Tastatur oder das Mikrofon zu übertragen.

14. Peer-Gerät nach Anspruch 13, wobei das Gerät angeordnet ist, um ein Verfahren nach einem der Ansprüche 7 bis 10 zu implementieren.

## Revendications

1. Procédé de partage d'une page web entre un dispositif et des dispositifs homologues, le procédé comprenant, dans le dispositif :
la recherche d'un dispositif homologue (opération 210) ;
l'émission, vers le dispositif homologue, d'un signal de demande de partage demandant au dispositif homologue d'afficher la page web (opération 224), ledit signal de demande de partage comprenant des informations d'emplacement de la page web ;
le fonctionnement dans un premier mode de commande fonctionnant en tant que souris tactile pour commander le dispositif homologue (opération 230), en réponse à l'émission du signal de demande de partage ;
la détection d'une coordonnée de toucher correspondant à une opération de toucher d'écran d'un utilisateur (opération 232) ;
l'émission, vers le dispositif homologue, d'un signal de commande correspondant à la coordonnée de toucher détectée pour déplacer un curseur de souris sur la page web affichée sur le dispositif homologue (opération 234) ;
recevoir, en provenance du dispositif homologue, une demande de changement de moyen d'entrée pour commander le dispositif homologue ; et
en réponse à la réception de la demande, passer du premier mode de commande à un second mode de commande pour entrer des caractères dans une fenêtre d'entrée de caractères de la page web affichée sur le dispositif homologue.

2. Procédé selon la revendication 1, ledit fonctionnement dans le premier mode de commande comprenant :
après avoir émis le signal de demande de partage au dispositif homologue, la réception des informations sur au moins un moyen d'entrée pris en charge par le dispositif homologue en provenance du dispositif homologue (opération 228) ; et
le fonctionnement dans le premier mode de commande sur la base des informations reçues.

3. Procédé selon la revendication 2, ledit au moins un moyen d'entrée comprenant au moins l'un d'une souris tactile, d'une souris à mouvement, d'un clavier et d'un microphone.

4. Procédé selon la revendication 1, comprenant en outre :
la détection d'un signal audio à l'aide d'un microphone du dispositif ou d'un caractère d'entrée à l'aide d'un capteur tactile du dispositif ; et
l'émission d'un signal de commande correspondant au signal audio détecté ou au caractère d'entrée vers le dispositif homologue pour entrer des caractères dans la fenêtre d'entrée de caractères de la page web affichée sur le dispositif homologue.

5. Procédé selon la revendication 1, comprenant en outre, pendant que la page web est affichée sur le dispositif, la fourniture d'une indication de la présence du dispositif homologue capable de partager la page web (opération 216).

6. Procédé permettant de partager une page web, le procédé comprenant, au niveau d'un dispositif homologue :
l'émission, vers un dispositif, d'un signal pour indiquer que la page web peut être affichée par le dispositif homologue (opération 212) ;
la réception, en provenance du dispositif, d'un signal de demande de partage comprenant des informations d'emplacement de la page web ;
l'affichage de la page web après avoir reçu le signal de demande de partage à l'aide des informations d'emplacement (opération 226) ;
l'émission, vers le dispositif, des informations comprenant que le dispositif homologue prend en charge des entrées basées sur une souris tactile, un clavier et un microphone ;
la réception, en provenance du dispositif, d'un signal de commande associé à la souris tactile ; la commande de la page web affichée conformément au signal de commande (opération 236) ; et l'émission, vers le dispositif, d'une demande pour changer le moyen d'entrée en vue de la commande du dispositif homologue, de la souris tactile au clavier ou au microphone.

7. Procédé selon la revendication 6, la commande de la page web affichée conformément au signal de commande comprenant :
le déplacement de la position d'un curseur de souris commandant la page web affichée sur la base du signal de commande.

8. Procédé selon la revendication 7, l'émission de la demande de changement de moyen d'entrée comprenant :
en réponse au curseur de souris positionné sur une fenêtre d'entrée de caractères de la page web, l'émission de la demande pour changer de moyen d'entrée de la souris tactile au clavier ou au microphone.

9. Procédé selon la revendication 8, comprenant en outre :
la réception, en provenance du dispositif, d'un signal de commande correspondant à un signal audio ou à un caractère d'entrée obtenu par le dispositif ; et
l'entrée des caractères sur la base du signal de commande correspondant à un signal audio ou à un caractère d'entrée dans la fenêtre d'entrée de caractères de la page web.

10. Procédé selon la revendication 6, ledit affichage de la page web comprenant :
l'affichage de la page web possédant une résolution correspondant à une taille d'écran du dispositif homologue.

11. Dispositif (200) destiné à partager une page web entre le dispositif et des dispositifs homologues, le dispositif comprenant une unité d'entrée (330) comprenant un capteur tactile ;
une unité de communication (310) ; et
un dispositif de commande (300) configuré pour :
commander à l'unité de communication (310) de rechercher un dispositif homologue (202, 204, 206) ;
commander à l'unité de communication (310) d'émettre un signal de demande de partage demandant au dispositif homologue d'afficher la page web, ledit signal de demande de partage comprenant des informations d'emplacement de la page web pour le dispositif homologue ;
fonctionner dans un premier mode de commande, fonctionnant en tant qu'une souris tactile, pour commander le dispositif homologue, en réponse à l'émission du signal de demande de partage ;
commander au capteur tactile de détecter une coordonnée de toucher correspondant à une opération de toucher d'écran d'un utilisateur ;
commander à l'unité de communication (310) d'émettre un signal de commande correspondant à la coordonnée de toucher détectée vers le dispositif homologue pour déplacer un curseur de souris sur la page web affichée sur le dispositif homologue ;
commander à l'unité de communication (310) de recevoir une demande de changement de moyen d'entrée en vue de la commande du dispositif homologue en provenance du dispositif homologue ; et
en réponse à la réception de la demande, passer du premier mode de commande à un second mode de commande pour entrer des caractères dans une fenêtre d'entrée de caractères de la page web affichée sur le dispositif homologue.

12. Dispositif selon la revendication 11, le dispositif étant agencé pour mettre en œuvre un procédé selon l'une des revendications 2 à 5.

13. Dispositif homologue (202, 204, 206) destiné à partager une page web, le dispositif homologue comprenant :
une unité d'affichage (420) ;
une unité de communication (410) ; et
un dispositif de commande (400) configuré pour :
commander l'unité de communication (410) pour émettre un signal vers un dispositif (200) pour indiquer que la page web peut être affichée par l'unité d'affichage (420) du dispositif homologue,
commander à l'unité de communication (410) de recevoir un signal de demande de partage comprenant des informations d'emplacement de la page web en provenance du dispositif,
afficher, sur l'unité d'affichage (420), la page web après avoir reçu le signal de demande de partage à l'aide des informations d'emplacement,
commander à l'unité de communication (410) d'émettre des informations comprenant que le dispositif homologue prend en charge des entrées basées sur une souris tactile, un clavier et un microphone,
commander à l'unité de communication (410) de recevoir un signal de commande associé à la souris tactile du dispositif,
commander à l'unité d'affichage (420) de commander la page web affichée en fonction du signal de commande, et
commander à l'unité de communication (410) d'émettre une demande de changement de moyen d'entrée en vue de la commande du dispositif homologue, de la souris tactile au clavier ou au microphone.

14. Dispositif homologue selon la revendication 13, le dispositif étant agencé pour mettre en œuvre un procédé selon l'une des revendications 7 à 10.
